# EUROPEAN PATENT APPLICATION

(11) **EP 2 860 131 A1**
(43) Date of publication of application: **15.04.2015**
(21) Application number: 14187628.4
(22) Date of filing: 03.10.2014
(51) Int. Cl.: B65D 63/10, H02G 3/32

(54) **A fastening tie**

(30) Priority: 11.10.2013 GB 201318061
(71) Applicant: Hellermanntyton Limited, Manchester M22 4TY (GB)
(72) Inventor: Blanks, Steve, Manchester, Greater Manchester M22 4TY (GB)
(74) Representative: Jones, David Alan

(57) **Abstract**

A resilient fastening tie (1) is provided comprising a resiliently flexible elongate strap (2) comprising a series of locking sections (22) longitudinally arranged along its length and a series of neck sections (24) of reduced width in the transverse direction interconnecting the locking sections (22). Each locking section (22) comprises a transversely collapsible locking section body and a transversely arranged slot (26) defined within and extending depth wise through the locking section body that is arranged to receive a further locking section (22) of the strap (1) when the strap (1) is formed into a loop. The locking section body has a transverse width greater than the transverse width of the slot (26) and is transversely collapsible to at least the width of the slot (26) to enable the locking section body to be passed through a further slot (26) of a further locking section (22) of the strap (1). The slot (26) has a height defined in the longitudinal direction and the neck section (24) includes a projection extending from at least one of the upper and lower surfaces such that depth of the neck (24) at the location of the projection is greater than the height of the slot (26). The slot (26) is expandable in height to allow the neck (24) to pass therethrough when a force is applied to urge the neck (24) through the slot (26). This ability to expand also prevents damage to the article to which the fastener (1) is applied.

## Description

The present invention relates to a fastening tie, and in particular to flexible fastening tie for use in fastening delicate objects.

A cable tie is a commonly known type of fastener having a wide variety of applications including the bunching of electric cables or wires to organize and/or retain the cables and wires. Cable ties commonly include an elongate cable formed from a durable and mouldable material such as nylon, having a serrated toothed strap section including a series of unidirectional sloping teeth. A corresponding head is configured to receive the strap section and includes a pawl that locks against the teeth of the strap to prevent removal of the strap in a direction opposite to the insertion direction. Cable ties have become widely used as they are cheap to manufacture and quick and convenient to apply.

For certain applications the common nylon cable tie has been found to be too tensionally rigid, and to apply excessive clamping forces to the objects it is secured to, with the cable ties biting into the surface of the objects and/or preventing necessary expansion or flexing. In applications where the objects to be clamped are prone to damage, such as tying plants or compressible tubing, a more sympathetic means of securing the objects is required that provides sufficient holding force but allows movement, growth, expansion and/or prevents damage to the tied object, while retaining the convenience of a common cable tie.

GB2323763 describes a fastening tie having a series of diamond shaped sections arranged along its length, and a series of corresponding diamond shaped apertures defined within each section. The tie may be fastened into a loop at any point along its length by passing the strap through itself. The outer walls of the diamond shaped sections engage the edges of the aperture through which the strap is passed, thereby holding the tie in a loop. The repeating diamond configuration defines a series of flexible arms that are collapsible to allow the strap to expand and contract in length. However, it has been found that the thin wall thickness of the arms due to diamond shape of the apertures results in nonuniform collapsing of the strap along its length. In addition it has been found that the diamond sections pass to easily through the apertures leading to a loss of control of the fixing length, and in the reverse direction can result in the diamond sections slipping from the apertures causing release of the strap.

It is therefore desirable to provide an improved fastening tie which addresses the above described problems and/or which offers improvements generally.

According to the present invention there is provided a fastening tie as described in the accompanying claims.

In an embodiment of the invention there is provided a fastening tie comprising a resiliently flexible elongate strap having a depth defined between its upper and lower surfaces. The strap comprises a series of locking sections longitudinally arranged along its length and a series of neck sections of reduced width in the transverse direction interconnecting the locking sections. Each locking section comprises a transversely collapsible locking section body and a transversely arranged slot defined within and extending depth wise through the locking section body arranged to receive a further locking section of the strap when the strap is formed into a loop. The locking section body has a transverse width greater than the transverse width of the slot and being transversely collapsible to at least the width of the slot to enable the locking section body to be passed through a further slot of a further locking section of the strap. The slot has a height defined in the longitudinal direction and the neck section includes a projection extending from at least one of the upper and lower surfaces such that depth of the neck at the location of the projection is greater than the height of the slot, and the slot is expandable in height to allow the neck to pass therethrough when a force is applied to urge the neck through the slot.

In this way the projection provides a stop that prevents the free movement of the strap through the slot, thereby improving control over the selected length. The projection also provides a positive feedback to the user indicating each time a further locking section has been passed through the slot. The projection also assists in preventing release of the strap once it has been tightened to the selected tension.

The depth of the neck section at the location of the projection is preferably greater than the depth of the locking section body such that the locking section body is able to be pulled through the slot with less force than the neck section. Preferably the height of the slot is equal to the depth of the locking section. As such, the locking section is able to pass freely height wise through the slot while the neck section is impeded.

The projection comprises a tapered approach formation on at least one longitudinal end configured to engage with the slot into which it is inserted to expand the height of slot in the longitudinal direction to allow the slot to receive the neck therethrough. The tapered approach formation provides a leading edge that tapered from the level of the upper surface of the locking section to the maximum height of the projection, creating an expanding or wedging contact to urge the slot apart. As the slot is urged apart the locking section of the slot correspondingly contracts inwardly in the transverse direction.

The at least one projection comprises a convex configuration curving in at least the longitudinal direction, and preferably comprises a substantially domed configuration. This allows the projection to engage with the slot in any orientation to urge the slot apart.

Preferably a domed projection is provided on both the upper and lower surfaces of the neck section thereby providing additional depth and creating a more balanced engagement with the slot.

The upper and lower domed sections are preferably aligned such that the neck section is substantially spherical at the location of the projections.

The slot may comprise at least one concave scalloped recess widening the opening of the slot at the location of the recess and having a profile corresponding to the profile of the at least one projection of the neck section. The scalloped recess defined a cup or detent to receive and seat the domed projection.

The slot preferably comprises a pair of concave scalloped recesses located along longitudinally opposing edges of the slot on at least one of the upper and lower surfaces, the concave scalloped recesses corresponding in profile to the pair of domed projections and configured to receive and seat the domed sections. Preferably the slot comprises a pair of concave scalloped recesses located along longitudinally opposing edges of the slot on both the upper and lower surfaces, the concave scalloped recesses corresponding in profile to the domed projections and defining detents on opposing surfaces of the locking section for receiving the spherical neck section on insertion into the slot in a first direction and in the opposing return direction when the neck has passed through the slot.

The domed sections and the corresponding scalloped recesses may define corresponding tapered surfaces configured to create a camming action as the domed sections are urged through the slot to expand the height of the slot to allow the neck section to pass therethrough.

The locking sections are preferably substantially diamond shaped defining a serrated profile along opposing edges of the strap comprising a series of peaks and troughs. The diamond shape of the locking sections allows them to expand and contract in a scissor type manner with an expansion in the longitudinal direction being accompanied by a corresponding contraction in the transverse direction.

The elongate strap includes a spacer section arranged at a location along the length of the strap which does not comprise locking sections. Preferably the spacer section comprises at least one elongate member having a transverse width less than the width of locking sections and connected to licking sections at either end, and comprises at least one aperture. This configuration allows the spacer section to be formed with significantly less material than the locking sections. Therefore by replacing the central section of the tie with a spacer section for applications where the central section is substantially redundant, significant material savings may be made thereby lowering the cost of the fastener. This is particularly advantageous for high volume applications such as fasteners for tree saplings where cost point is a critical consideration. In addition, due to the absence of the thinned neck sections along the spacer section it is relatively less flexible than the rest of the body section providing advantageous rigidity for certain applications where flexibility is not desirable along the entire length.

Preferably the spacer section includes at least two transversely spaced elongate members and a cross brace member connecting the elongate members at a point along their length. The cross brace provides additional structural support for the relatively thin elongate members.

Where articles need to be tied separately, then preferably the opposite end of the strap may be formed into a secondary loop around a further article or articles.

The secondary loop may be formed by inserting the opposite end of the strap through another slot, pulling the strap through said other slot such that the serrations thereon successively engage the edges of said other aperture and releasing the strap once the secondary loop is sufficiently tight.

Preferably the tie comprises a flat strap having serrations along at least one longitudinal side edge thereof, the width of the strap between each pair of adjacent serrations being less than the width of the slots.

Preferably the strap has serrations that have oppositely inclined surfaces which converge towards their respective crests. Thus, the serrations can easily be pulled through the aperture, since the forwardly facing inclined surfaces of the serrations ride over the edges of the slot as the strap is tightened. When the strap is released, the slot remains held between adjacent serrations.

When a conventional tie is applied tightly around an object there is a risk that he tie could snap as the object expands or grows. However, a tie which is applied in accordance with this invention will undo itself as an object expands and exerts a radial force on the tie. When this happens the oppositely inclined surfaces of the serrations ride over the edges of the aperture through which the strap extends in a reverse operation of how the strap is tightened on application.

The present invention will now be described by way of example only with reference to the following illustrative figures in which:
Figure 1 is an isometric view of a fastener according to an embodiment of the invention;

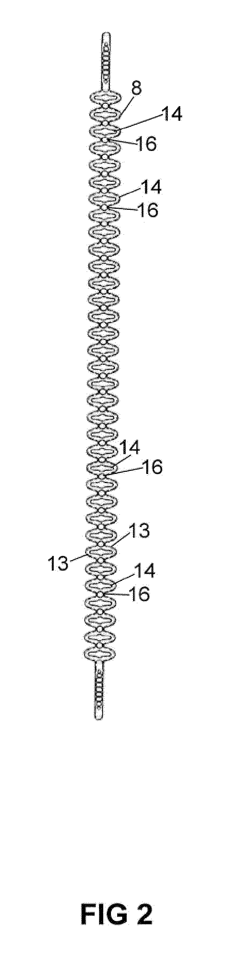

Figure 2 is a plan view of the fastener of Figure 1;
Figure 3 is an enlarged isometric view of the end of the fastener of Figure 1;

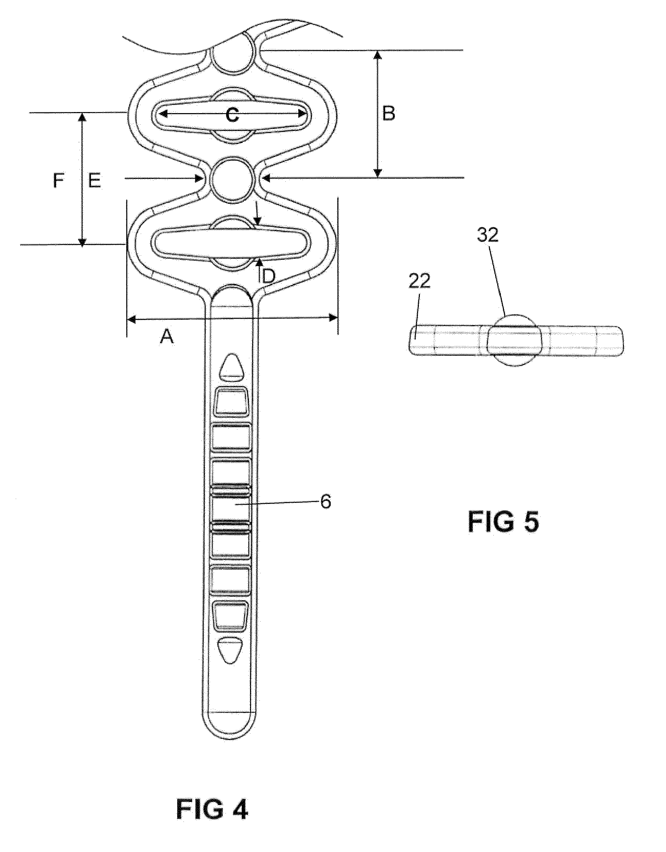

Figure 4 is a plan view of the arrangement of Figure 3;
Figure 5 is an end view of the fastener of Figure 1; and
Figure 6 is a plan view of a fastener according to another embodiment of the invention.

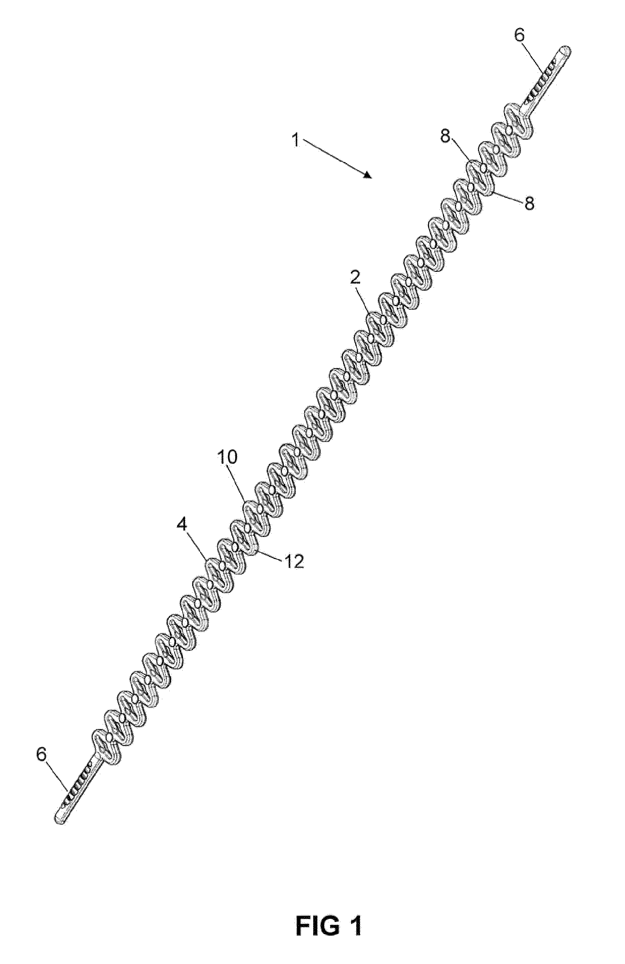

Referring to Figure 1, a fastening tie 1 comprises an elongate flat strap 2. The strap 2 comprises a central elongate body section 4 and end sections 6 arranged at longitudinally opposed ends of the body section 4. The central body section 4 of the strap 2 includes side edges 8, an upper surface 10 and a lower surface 12. The tie 1 is preferably formed of a plastics material and preferably a thermoplastic with the tie 1 being formed as a one-piece moulded article. The plastics material of the tie 1 is resiliently flexible, and thus the tie 1 can be stretched, thereby separating the serrations and expanding the apertures.

The side edges 8 of the body section 4 have a substantially serrated profile including a series of longitudinally extending peaked ridges 14 interspaced by a corresponding series of troughs 16. The peaks 14 and troughs 16 of each side edge 8 are longitudinally aligned and extend in opposing lateral directions relative to the central longitudinal axis of the strap 2 such that the peaks 14 and troughs 16 are arranged symmetrically about the longitudinal axis of the strap 2.

Each peaked section 14 includes a pair of oppositely inclined walls 13 tapering inwardly towards the apex 20 of the peak 14 in the laterally outwards direction, and meeting at their base with the walls 13 of the adjacent segment at the trough 16. In this way each pair of corresponding peaked sections define a substantially diamond shaped body segment 22, with each diamond shaped segment defining a locking segment 22. The corresponding troughs 16 are laterally spaced with a bridging neck section 24 defined therebetween that links the adjacent diamond locking segments 22. The apex 2 of each peaked section 14 has a curved profile.

Each diamond locking segment 22 includes an aperture 26. The aperture 26 comprises an elongate, substantially rectangular slot extending through the strap 2 between the upper and lower surfaces. The slot 26 includes a straight central section 28 and outwardly curved radiussed ends 30. The peripheral edges of the aperture 26 are inwardly spaced from the outer edges of the diamond locking segment 22 such that the aperture 24 is surrounded around its entire periphery by the body of the diamond locking segment 22.

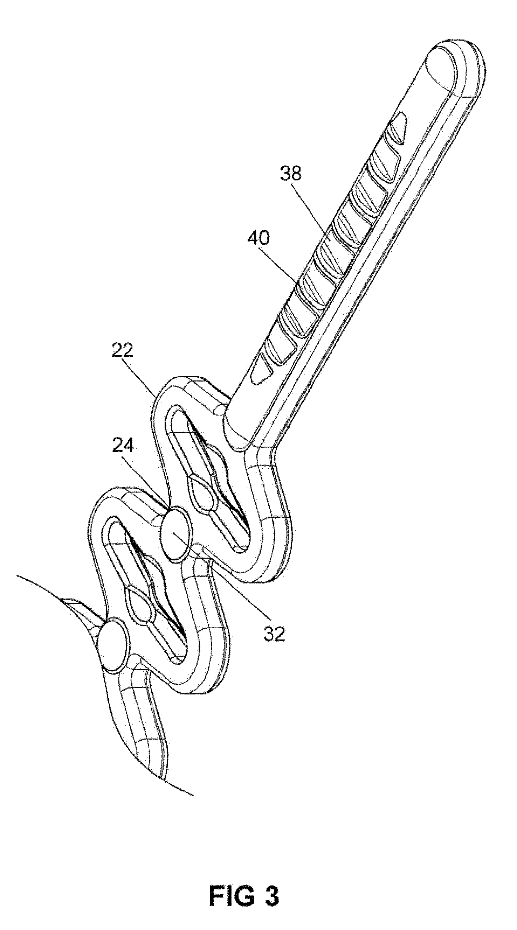

Each locking segment 22 when viewed from above as in the plan view of Figure 3 has a lateral width A and a longitudinal height B representing the distance between the troughs 16. The slot 26 has a width C extending in the transverse direction and a height D in the longitudinal direction. The neck 24 has a width E. The width A of each locking segment is greater than the width E of the neck and greater than the height B such that each locking segment 22 is longest in the transverse direction. The width A of each locking segment is also greater than the width C of the slot 26.

The end sections 6 comprise elongate straight sections extending longitudinally from either end of the body section 4. The width of the end sections 6 is substantially equal to the width E of the neck portions 24. The upper and lower surfaces of the end section 6 are curved having a radius substantially equal to the radius of the dome sections 32 such that the end section 6 are substantially cylindrical and appear circular when viewed end on with circular cross section corresponding to the cross section of the sphere defined by the domed sections 32. The distal ends 42 of the end sections 6 are domed and substantially correspond in shape to the domed elements 32. A plurality of spaced recesses 38 are formed along the upper surface of each end section 6, as shown in Figure 3, interspaced by a plurality of ridges. The ridges 40 form a grip section to assist the user in pulling the ends of the tie 1 when fastening.

Referring to Figure 3, each neck section 24 includes a raised domed element 32 located at the neck 16. A first domed element 32 is located on the upper surface of the neck 16, and second domed element 32 is located symmetrically on the lower surface, such that the first and second domed elements 32 combine to substantially define a spherical element coincident with and extending from opposing surfaces of the neck 16 and located between adjacent locking segments 22. The domed sections 32 project from the respective surfaces of the neck 24 in a direction transverse to the longitudinal axis of the strap 2. The thickness of the neck section 24 from its upper surface to its lower surface is substantially equal to the height D of the slots 26. The domed sections 32 increase the thickness of the neck section 24 such that it is greater than the height D of the slot 26.

Each slot 26 includes scalloped recesses 34 located on longitudinally opposed sides of the slot 26. A first pair of scalloped recesses 34 is provided formed on the upper surface, and a corresponding pair of recesses 34 is formed on the lower surface. The scalloped sections are located centrally along the width C of the slots 26 along the central longitudinal axis of the strap 2 at the peripheral edge of the slots 26, with the pair of recesses 34 being arranged symmetrically on either side of the slot 26. The recesses extend inwardly into the body of the locking section 22 from the surface of the locking section 26, with the pairs of recesses on opposing sides of the locking section extending into the locking section 22 in opposing directions. The scalloped sections are concave having a radius corresponding to the radius of the domed sections 32, with each pair of recesses 34 combining to define a detent configured to receive and seat a domed section 32 and widening the mouth of the slot at the width-wise centre of the slot 26. At the plane of the upper and lower surfaces of the locking sections 22 the scalloped recesses define an arcuate form projecting away from the peripheral edges of the slot 26 in opposing longitudinal directions.

In use, the tie 1 may be used to secure a first object to further object. For example, the tie may be used to secure a flexible hose to a cable duct or similar support structure, for example within an aircraft. By way of an illustrative example, the operation of the tie will be described with reference to the above mentioned flexible hose and ducting application. It will however be appreciated that in this explanation the hose is to be interpreted as any object or objects that are to be secured, and the ducting is to be interpreted as an further object to which the first object or objects are secured. The tie 1 is extended around the hose and around the part of the ducting to which the hose is to be secured, such that the tie 1 forms a loop around both. The tie 1 is then fastened by inserting either end 6 through a selected one of the slots 26 in the one of the locking sections 22 of the body section 4. The selected locking section 22 defines in maximum available length of the tie 1 in the fastened form. The greater the distance between the end 6 of the tie selected to pass through the slot 26 and the selected locking section 22, the greater the maximum available tie length.

Once a suitable locking section 22 has been selected, the end 6 of the tie 1 is inserted into the corresponding slot 26 of that locking section. The end section 6 has a cross section of substantially the same diameter as the domed sections 32, which is greater than the width D of the slot 26. The domed end 42 of the end section 6 is received in the detent defined by the pair of scalloped recesses 34. As the domed end 42 of the end section 6 is grater in diameter than the height D of the slot the end does not easily insert into the slot 26. Some force must be applied be the user to urge the end 6 into the slot 26. A wedging arrangement is created between the convex surfaces of the recesses 34 and the domed end surface 42 of the end section which as the urging force is applied assists in forcing the slot 26 to expand and increase in width to accommodate the end section 6. As the slot 26 expands in width the ends of the slot 26 are simultaneously drawn inwardly causing the diamond locking section to simultaneously expand in height B and compress in width A. As the end section 6 is pulled through the slot 26 the locking section 22 reaches the slot 26. At this point along the strap 2 the thickness is reduced from the circular profile of the end section 6 to the thinner body section 4 of the strap having planar parallel upper and lower surfaces. As such at this point the slot 26 expands in width such that it substantially returns back to its original configuration. The forwardly inclined walls 13 of the first locking section 22 come into abutment with the end peripheral edges of the slot 26. This abutment causes lateral compression of the locking section 22 with the opposed outer tips 14 being urged towards each other while the neck section 24 is urged longitudinally away from the end section 6 extending the longitudinal height B of the locking section and decreasing its width A. At this stage the slot 26 is at its maximum width and with the locking section 26 received in the slot 26 it is unable to extend in width any further, thereby optimising the resistance applied to compress the locking section 22. When the opposed transverse peaks 14 contract inwardly sufficiently that the width A of the locking section 22 is equal to the width C of the slot the locking section 22 is able to pass through the slot 26.

As the peaks 14 of the locking section 22 pass through the slot 26 the rearwardly tapering walls 13 are then in abutment with the slot 26 which narrow towards the neck 24. Therefore, as the locking section continues to pass through the slot 26 it is able to expand in width back to its original configuration as the inward compressional force is released until it is fully returned to its original form when the through at the base of the wall 13 reaches the slot 26. When the locking section 22 has passed through the slot 26 the domed elements 32 of the neck 24 come into engagement with the slot 26 and are received within the detents defined by the scalloped sections 34. As described above in relation to the distal end 42 of the strap 2, the diameter of the sphere defined by the domed elements 32 is greater in diameter than the height D of the slot 26. The domed elements 32 are seated in the recesses 34 and this engagement prevents the strap 2 from continuing to pass freely through the slot 26. The seating of the ball or sphere defined by the domed elements 32 in the corresponding recesses 34 provides a positive physical feedback to the user indicating that the locking section 22 passed through the slot 26 and a further locking section is located ready to be drawn through. This provides the user with a useful indication of how far the strap 2 is being drawn through the slot 26, as well as providing increased control of the procedure rather than the strap pulling freely and unhindered through the slot 26. As with the distal end 42, and increase in force by the user overcomes thus resistance, with the domed sections 32 and the convex recesses 34 providing the same wedging action to force the slot to increase in height D to permit the passage of the domed elements 32 of the neck 24.

The user continues to draw the locking sections 22 through the slot 26 until a suitable length and tension in the strap 2 has been achieved. At this point the user continues to pull the strap 2 until the nearest ball 32 of the relevant neck section 24 is drawn through the slot. The ball 32 seats in the detent defined by the pair of recesses 34 on the lower surface of the locking section 22 corresponding to the slot 26 and prevent the locking section from returning back through the slot 26 thereby holding the locked position. If the user were not to pull through the last ball 32 the locking section would still be retained in eth locked position due to the greater width A of the locking section compared to the width C of the slot 26 prevent return without the application of an overriding force by the user. The flexibility and compressibility of locking sections is however such that should the fastened object expand such expansion would be sufficient to cause release of the locking section allowing the strap to expand its fastened length to permit continued expansion of the fastened object. For example, where the tie 1 is used in horticultural to hold a growing plant, as the plant grows, it exerts a radial force on the tie, which causes the strap 2 to stretch until the force is sufficient to pull the locking section 22 adjacent the lower surface of the strap 2 back through the slot 26. In this way, the tie 1 adjusts itself automatically as the plant grows. The flexibility is also such that if an overly compressive force is applied to the user, when this force is released the strap 2 will release itself to a les compressive state thereby avoiding damage to the fastened object.

In certain applications double fastening loops may be required and this may be achieved by creating two separate loops by feeding both distal ends 6 into separate locking section 22 to create twin loops.

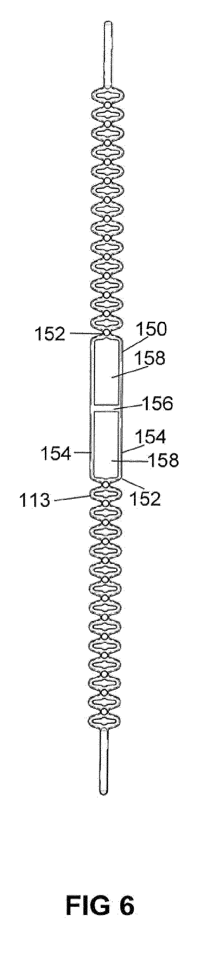

The locking sections preferably extend continuously along the entire length of the strap 2 to maximise the number of configurations achievable with the tie 1. In an alternative embodiment as shown in Figure 6, a spacer section 150 may be provided along the length of the body section 104 and preferably centrally along its length. The opposing ends 152 of the spacer section 150 are configured in the same manner as the walls 113 of the locking sections tapering transversely outwards away from the neck 124. The spacer section 150 further comprises a pair of elongate filaments 154 interconnecting the end section 152 and spaced apart transversely to define a width substantially equal to the width A of the locking sections 122. A reinforcing cross member 156 extends transversely between the two filaments 154 at the lengthwise centre of the spacer section 150 to minimise bowing of the spacer section 150 and improve rigidity. Voids 158 are defined between the filaments 154. The spacer section 150 replaces the locking sections 122 at the centre section of the body section 104 and as a significant area of the spacer section is comprised by the voids 158 the amount of material required to form the spacer section is significantly less than the equivalent length of body section 104 including locking sections 122 the presence of the voids. The length of the filaments 154 may be selected to increase or decrease the length of the spacer section 150 and hence the number of locking section 122 omitted and material saved.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A fastening tie comprising:
a resiliently flexible elongate strap having a depth defined between its upper and lower surfaces and comprising a series of locking sections longitudinally arranged along its length and a series of neck sections of reduced width in the transverse direction interconnecting the locking sections, each locking section comprising a transversely collapsible locking section body and a transversely arranged slot defined within and extending depth wise through the locking section body arranged to receive a further locking section of the strap when the strap is formed into a loop, the locking section body having a transverse width greater than the transverse width of the slot and being transversely collapsible to at least the width of the slot to enable the locking section body to be passed through a further slot of a further locking section of the strap,
wherein the slot has a height defined in the longitudinal direction and the neck section includes a projection extending from at least one of the upper and lower surfaces such that depth of the neck at the location of the projection is greater than the height of the slot, and the slot is expandable in height to allow the neck to pass therethrough when a force is applied to urge the neck through the slot.

2. A fastening tie according to claim 1 wherein the depth of the neck section at the location of the projection is greater than the depth of the locking section body such that the locking section body is able to be pulled through the slot with less force than the neck section.

3. A fastening tie according to claim 1 or 2 wherein the projection comprises a tapered approach formation on at least one longitudinal end configured to engage with the slot into which it is inserted to expand the height of slot in the longitudinal direction to allow the slot to receive the neck therethrough.

4. A fastening tie according to claim 3 wherein the at least one projection comprises a convex configuration curving in at least the longitudinal direction.

5. A fastening tie according to claim 4 wherein the at least one projection comprises a substantially domed configuration.

6. A fastening tie according to claim 5 wherein a domed projection is provided on both the upper and lower surfaces of the neck section.

7. A fastening tie according to claim 6 wherein the upper and lower domed sections are aligned such that the neck section is substantially spherical at the location of the projections.

8. A fastening tie according to any one of claims 4 to 7 wherein the slot comprises at least one concave scalloped recess widening the opening of the slot at the location of the recess and having a profile corresponding to the profile of the at least one projection of the neck section.

9. A fastening tie according to claim 6 or 7 wherein the slot comprises a pair of concave scalloped recesses located along longitudinally opposing edges of the slot on at least one of the upper and lower surfaces, the concave scalloped recesses corresponding in profile to the pair of domed projection and configure to receive and seat the domed sections.

10. A fastening tie according to claim 7 wherein the slot comprises a pair of concave scalloped recesses located along longitudinally opposing edges of the slot on both the upper and lower surfaces, the concave scalloped recesses corresponding in profile to the domed projections and defining detents on opposing surfaces of the locking section for receiving the spherical neck section on insertion into the slot in a first direction and in the opposing return direction when the neck has passed through the slot.

11. A fastening tie according to claim 10 wherein the domed sections and the corresponding scalloped recesses define corresponding tapered surfaces configured to create a camming action as the domed sections are urged through the slot to expand the height of the slot to allow the neck section to pass therethrough.

12. A fastening tie according to any preceding claim wherein the locking sections are substantially diamond shaped defining a serrated profile along opposing edges of the strap comprising a series of peaks and troughs.

13. A fastening tie according to any preceding claim wherein the elongate strap includes a spacer section arranged at a location along the length of the strap which does not comprise locking sections.

14. A fastening tie according to claim 13 wherein the spacer section comprises at least one elongate member having a transverse width less than the width of locking sections and connected to licking sections at either end.

15. A fastening tie according to claim 14 wherein the spacer section includes at least two transversely spaced elongate members and a cross brace member connecting the elongate members at a point along their length.
